# EUROPÄISCHE PATENTSCHRIFT

(11) **EP 0 662 926 B1**
(45) Veröffentlichungstag und Bekanntmachung des Hinweises auf die Patenterteilung: **27.11.1996**
(21) Anmeldenummer: 93919010.4
(22) Anmeldetag: 16.09.1993
(51) Int. Cl.: B65G 33/30, F23G 5/44

(54) **TRANSPORTVORRICHTUNG MIT EINER TRANSPORTSCHNECKE**
TRANSPORT DEVICE WITH A SCREW CONVEYOR
DISPOSITIF DE TRANSPORT A VIS TRANSPORTEUSE

(30) Priorität: 29.09.1992 DE 4232684
(43) Veröffentlichungstag der Anmeldung: 19.07.1995
(73) Patentinhaber: SIEMENS AKTIENGESELLSCHAFT, 80333 München (DE)
(72) Erfinder: HERM, Hartmut, D-63303 Dreieich (DE); MAY, Karl, D-61118 Bad Vilbel (DE); UNVERZAGT, Karlheinz, D-63065 Offenbach am Main (DE)
(86) Internationale Anmeldenummer: DE9300877
(87) Internationale Veröffentlichungsnummer: WO9407780

(56) Entgegenhaltungen:
- WO-A-85/04837
- CH-A- 201 148
- GB-B- 1 594 543
- GB-C- 443 372
- GB-C- 509 721
- GB-C- 569 370
- GB-C- 576 688
- GB-C- 850 699
- SE-C- 141 151
- US-A- 3 896 923
- US-A- 4 128 160
- Patent Abstracts of Japan, Band 7, Nr 92, M-208, Zusammenfasung von JP, 58- 17006 (KOGYO GIJUTSUIN (JAPAN)), 1. Februar 1983

## Beschreibung

Die Erfindung betrifft eine Transportvorrichtung mit einer Transportschnecke, die um ihre Längsachse drehbar ist, in einem Gehäuse, das eine Einfüllöffnung und eine Abgabeöffnung aufweist, angeordnet ist und in einem Teilabschnitt des Gehäuses eine kleinere Steigung als im übrigen Bereich aufweist.

Derartige Transportvorrichtungen sind bekannt. Sie werden für verschiedenartige Stoffe eingesetzt.

Bekannte Transportvorrichtungen werden häufig nur bis zu Dreiviertel ihres Volumens gefüllt, um ein Verstopfen zu vermeiden.

Aus der US 3, 896, 923 ist eine Transportvorrichtung bekannt, die eine Transportschnecke mit von der Einfüllöffnung in Transportrichtung zunehmender Steigung enthält. Derjenige Teil der Transportschnecke, der am langsamsten transportiert, befindet sich also im Bereich der Einfüllöffnung. In einem Abstand von der Einfüllöffnung ist die Steigung der Transportschnecke größer als im Bereich der Einfüllöffnung. Das eingespeiste Gut wird also, wenn es sich von der Einfüllöffnung entfernt schneller transportiert als an der Einfüllöffnung. Dadurch wird die Bildung eines Pfropfens verhindert.

Falls eine Transportvorrichtung eingesetzt werden soll, um das zu transportierende Gut in einen Reaktionsraum zu transportieren, kann gefordert sein, daß über die Transportvorrichtung keine Luft in den Reaktionsraum gelangt und/oder kein Gas den Reaktionsraum über die Transportvorrichtung verläßt. Ein solcher Reaktionsraum kann die Schweltrommel einer aus der EP-0 302 310 B1 bekannten Anlage zur thermischen Abfallentsorgung sein. Dabei wird durch die Transportvorrichtung Abfall unterschiedlicher Art, z.B. verkleinerter Hausmull, kleinstückiger Industrieabfall, aber auch teilweise verfestigte Schlämme, der Schweltrommel zugeleitet. Der Schwelvorgang in der Schweltrommel kann durch eine plötzliche Steigerung der Zufuhr von Luftsauerstoff gestört werden, da der Schwelprozeß unterstöchiometrisch ablaufen muß. Andererseits soll das in den Schwelvorrichtung entstehende Schwelgas über eine Schwelgasleitung einer Brennkammer zugeführt werden. Es darf kein Schwelgas über die Transportvorrichtung zurückströmen und damit in die Umgebung gelangen.

Eine Transportvorrichtung, durch die hindurch im Betrieb kein Gas strömen kann, ist aus der GB 569 370 zu entnehmen. Dort erstreckt sich die Transportschnecke nicht über die gesamte Länge ihres Gehäuses, so daß sich ein Pfropfen aus dem transportierten Gut bildet. Der Pfropfen kann einen Gasstrom im Gehäuse verhindern. Dadurch, daß abschnittsweise keine Transportschnecke vorhanden ist, kann es jedoch in einem solchen Abschnitt zu einer Verstopfung der Transportvorrichtung kommen.

Für einen reibungslosen Transport des Gutes ist erforderlich, daß das zu transportierende Gut nicht an der Transportschnecke haftet. Um das zu erreichen, ist es üblich, daß im Gehäuse an dessen Wand Leisten angeordnet sind, die in den Zwischenraum zwischen Transportschnecke und Gehäuse hineinragen. Wenn sich die Transportschnecke dreht, wird zu transportierendes Gut durch die Leisten von der Transportschnecke abgestreift. Solche Leisten unterliegen einem hohen Verschleiß.

Der Erfindung lag die Aufgabe zugrunde, eine Transportvorrichtung anzugeben, die stets gewährleistet, daß keine gasförmigen Stoffe, wie Luft oder Schwelgas, durch sie hindurchströmen können und die trotzdem nicht verstopft werden kann.

Die Aufgabe wird gemäß der Erfindung dadurch gelöst, daß sich der Abschnitt der Transportschnecke mit kleinerer Steigung in Transportrichtung in einem Abstand von der Einfüll und der Abgabeöffnung befindet.

In dem Teilabschnitt mit kleinerer Steigung wird das zu transportierende Gut verdichtet. Durch dieses Verdichten wird das Gut zu den Wänden des Gehäuses hingedrückt, was eine weitgehend gasdichte Abdichtung des Gehäuses in diesem Teilabschnitt zur Folge hat. Es kann folglich kein Luftsauerstoff von außen durch die Transportvorrichtung in einen Reaktionsraum, z.B. in eine Schweltrommel einer Schwel-Brenn-Anlage gelangen. Außerdem kann kein im Reaktionsraum entstandenes Gas, z.B. Schwelgas, aus der Schweltrommel, entgegen der Transportrichtung durch die Transportvorrichtung hindurch in die Umgebung gelangen. Die Transportvorrichtung nach der Erfindung ist vorteilhafterweise stets gasdicht. Darüber hinaus ist dadurch, daß die Transportschnecke einstückig ist und sich über das gesamte Gehäuse erstreckt, ein Verstopfen der Transportvorrichtung, obwohl sie gasdicht verschlossen ist, weitgehend ausgeschlossen.

Ein Teilstück der Transportschnecke, das eine kleinere Steigung aufweist, kann zwischen zwei Teilstücken mit größerer Steigung angeordnet sein. Das verdichtete Volumen des Gutes, das die Transportvorrichtung abdichtet, befindet sich dann in einem inneren Abschnitt der Transportvorrichtung.

Nach einem anderen Beispiel weist die Transportschnecke im Gehäuse eine Lücke auf. Im Bereich dieser Lücke wird das Gut nicht durch eine Transportschnecke weiterbewegt. Das durch ein erstes Teilstück der Transportschnecke, das sich vor der Lücke befindet, herangeführte Gut staut sich zunächst innerhalb der Lücke auf, wodurch es dazu kommt, daß das Gut den gesamten freien Raum innerhalb der Lücke bis hin zur Gehäusewand ausfüllt. Es bildet sich also auch dort ein gasdichter Verschluß. Durch das ständig nachgespeiste Gut bewegt sich das verdichtete Volumen des Gutes durch die Lücke hindurch und wird durch ein zweites Teilstück der Transportschnecke, das sich hinter der Lücke befindet, abgebaut und abtransportiert, während an der gegenüberliegenden Seite der Lücke das verdichtete Volumen ergänzt wird. Das Volumen des Gutes innerhalb der Lücke ist ständig in Bewegung, wobei es aber so verdichtet ist, daß die Transportvorrichtung stets gasdicht verschlossen ist.

Nach einem anderen Beispiel endet die Transportschnecke im Gehäuse in einem Abstand vor der Abgabeöffnung. Wie bei dem zuvor geschilderten Beispiel bildet sich im Betrieb eine Zone aus verdichtetem Gut, die ausgangsseitig abgebaut wird, während sie durch die Transportschnecke ergänzt wird. Der Unterschied zum vorherigen Beispiel ist darin zu sehen, daß ein gasdichter Verschluß der Transportvorrichtung statt in einem inneren Abschnitt in der Nähe des Ausgangs des Gehäuses angeordnet ist.

Beispielsweise ist zwischen der Transportschnecke und ihrem Gehäuse ein Ausweichraum vorhanden.

Dadurch, daß die Transportvorrichtung zumindest abschnittsweise zur Bildung eines gasdichten Verschlusses vollständig mit dem zu transportierenden Gut gefüllt ist, könnte das verdichtete Gut so stark an der Transportschnecke haften, daß es sich mit der Transportschnecke dreht. Dann wäre ein Weitertransport nicht mehr möglich. Das Gut würde in der Transportvorrichtung bleiben. Um ein Mitdrehen des Gutes mit der Transportschnecke zu verhindern, ist zwischen der Transportschnecke und dem Gehäuse der Ausweichraum vorhanden. Dieser ist dadurch gebildet, daß von der Längsachse der Transportschnecke senkrecht zur Längsachse nach außen gemessen zwischen dem größten Radius der Transportschnecke und der Gehäusewand in Abhängigkeit von der Richtung, in der gemessen wird, ein unterschiedlich großer Abstand frei bleibt. Damit ist vorteilhafterweise sichergestellt, daß sich das transportierte Gut zeitweise von der Transportschnecke lösen kann, so daß es nicht mit der Transportschnecke rotiert.

Vorteilhafterweise brauchen an der Innenwand des Gehäuses keine Leisten angebracht zu werden, was bisher üblich war, um das Gut daran zu hindern, sich mit der Transportschnecke zu drehen. Während solche Leisten einem hohen Verschleiß unterliegen, kann die Transportvorrichtung nach der Erfindung weitgehend verschleißfrei arbeiten.

Das Gehäuse hat zur Bildung des Ausweichraumes beispielsweise einen kreisförmigen Querschnitt und die Längsachse der Transportschnecke ist im Gehäuse exzentrisch zur Längsachse des Gehäuses angeordnet.

Nach einem anderen Beispiel hat das Gehäuse einen trogförmigen Querschnitt mit einem unteren halbkreisförmigen Teil und einem oberen rechteckigen Teil.

Nach einem anderen Beispiel hat das Gehäuse einen polygonförmigen Querschnitt. Dieser polygonförmige Querschnitt kann ein trogförmiger Querschnitt mit einem unteren polygonförmigen Teil und einem oberen rechteckigen Teil sein.

Alle diese Ausführungsformen bewirken, daß das zu transportierende Gut nicht mit der Transportschnecke rotiert.

Die Transportschnecke kann im Bereich der Einfüllöffnung konisch mit in Transportrichtung zunehmendem Durchmesser ausgebildet sein. Eine solche Ausführungsform ist von besonderer Bedeutung, wenn sich oberhalb der Einfüllöffnung ein Fallschacht befindet, dem ein Füllstandsmesser zugeordnet ist. Falls die Transportschnecke über ihre gesamte Länge einen gleichbleibenden Querschnitt aufweist, wurde das zu transportierende Gut bei Betrieb der Vorrichtung im Fallschacht eine in Transportrichtung ansteigende Oberfläche aufweisen. Eine zuverlässige Füllstandsmessung ist dann nicht möglich. Durch die konische Ausbildung des unterhalb des Fallschachtes befindlichen Schneckenabschnitts ist gewährleistet, daß das Gut im Fallschacht stets eine weitgehend horizontale Oberfläche hat. Das ist darauf zurückzuführen, daß unterhalb der Einfüllöffnung in Transportrichtung zunehmend mehr Gut abtransportiert wird. Dadurch ist eine Füllstandsmessung erst möglich.

Mit der Einrichtung nach der Erfindung wird insbesondere der Vorteil erzielt, daß durch die Transportvorrichtung hindurch keine gasförmigen Stoffe strömen können. Sowohl ein Luftstrom in Transportrichtung, als auch ein Gasstrom in entgegengesetzter Richtung sind ausgeschlossen. Außerdem werden Verstopfungen der Transportvorrichtung weitgehend vermieden.

Ausführungsbeispiele des Verfahrens und der Einrichtung zum Transport eines Gutes werden anhand der Zeichnung näher erläutert:
- FIG 1: zeigt eine Transportvorrichtung mit einer Transportschnecke, die ein Teilstück mit niedriger Steigung aufweist.
- FIG 2: zeigt eine Transportvorrichtung mit einer Transportschnecke, die eine Lücke aufweist.
- FIG 3: zeigt eine Transportvorrichtung mit einer Transportschnecke, die in einem Abstand vor der Abgabeöffnung endet.
- FIG 4: zeigt eine Transportvorrichtung mit einem kreisförmigen Gehäusequerschnitt und einer exzentrisch angeordneten Transportschnecke.
- FIG 5: zeigt eine Transportvorrichtung mit einem trogförmigen Gehäuse.
- FIG 6: zeigt eine Transportvorrichtung mit einem Gehäuse, das einen polygonförmigen Querschnitt hat.
- FIG 7: zeigt eine Transportvorrichtung mit einem trogförmigen Gehäuse, das einen polygonförmigen Querschnitt hat.
- FIG 8: zeigt eine Transportvorrichtung mit einer im Bereich der Einfüllöffnung konisch ausgebildeten Transportschnecke.

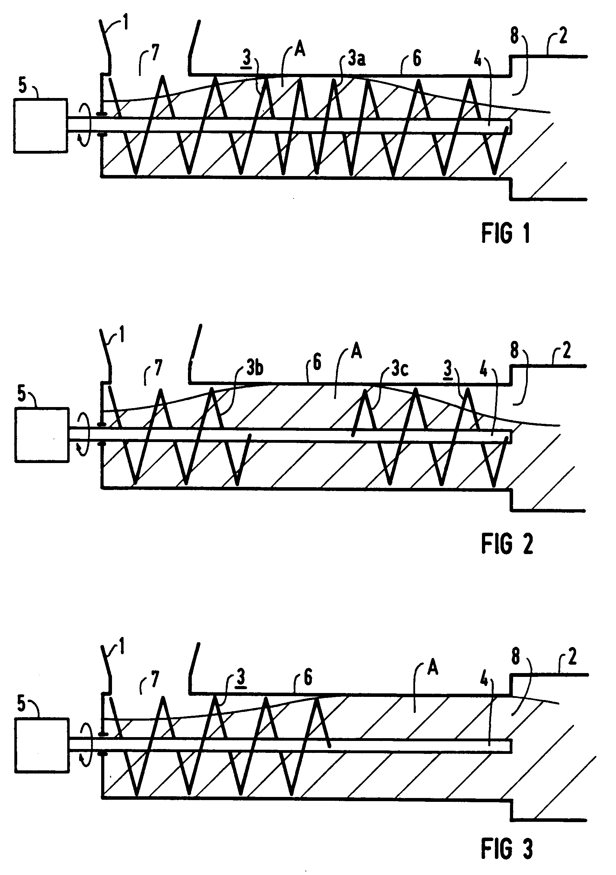

Die Ausgestaltungen einer Transportvorrichtung nach den Figuren 2 und/oder 3 werden nur in Kombination mit der Ausführungsform der Figur 1 eingesetzt. Die Figuren 2 und 3 zeigen allein keine Ausführung nach der Erfindung.

Die Figuren 1, 2 und 3 zeigen eine Transportschnecke 3 zum Transport eines Gutes A, beispielsweise zum Transport von Abfall von einem Fallschacht 1 zu einer Schweltrommel 2, die Bestandteil einer Schwel-Brenn-Anlage sein kann. Die Transportschnecke 3 ist um ihre Längsachse drehbar. Sie ist dazu auf einer Achse oder Welle 4 angeordnet, die durch einen Motor 5 gedreht werden kann. Die Transportschnecke 3 ist in einem Gehäuse 6 angeordnet, das zumindest eine Öffnung zur Durchführung der Achse oder Welle 4, sowie eine Einfüllöffnung 7 und eine Abgabeöffnung 8 für das Gut A aufweist. Mit der Einfüllöffnung 7 kann der Fallschacht 1 verbunden sein. An die Abgabeöffnung 8 kann sich die Schweltrommel 2 anschließen. Durch die Einfüllöffnung 7 in das Gehäuse 6 eingefülltes Gut A wird durch die sich drehende Transportschnecke 3 zur Abgabeöffnung 8 befördert und dort abgegeben.

Bei bestimmten Anwendungsfällen, beispielsweise beim Transport von Abfall vom Fallschacht 1 zur Schweltrommel 2 ist es erforderlich, daß weder Luftsauerstoff von der Einfüllöffnung 7 zur Schweltrommel 2 gelangt, noch daß Schwelgas aus der Schweltrommel 2 im Gegenstrom zum transportierten Abfall durch die Einfüllöffnung 7 in die Umgebung gelangt.

Nach Figur 1 hat ein Teilstück 3a der Transportschnecke 3, um einen Gasstrom durch die Transportvorrichtung zu verhindern, eine kleinere Steigung als die übrige Transportschnecke 3. Damit wird erreicht, daß das transportierte Gut A im Bereich dieses Teilstückes 3a stärker verdichtet wird als sonst, was dazu führt, daß im Bereich des Teilstückes 3a der Transportschnecke 3 der gesamte Teilraum im Gehäuse 6 durch das Gut A ausgefüllt ist. Das transportierte Gut A selbst verschließt dort das Gehäuse 6 gasdicht. Es können darin weder Luft von der Einfüllöffnung 7 zur Abgabeöffnung 8, noch Schwelgas in umgekehrter Richtung strömen. In Transportrichtung hinter der Verdichtungszone, die sich im Bereich des Teilstücks 3a der Transportschnecke 3 befindet, hat die Transportschnecke 3 wieder eine größere Steigung. Die über den gesamten Querschnitt des Gehäuses 6 sich erstreckende Packung des Gutes A wird dadurch wieder aufgelöst. In der Transportvorrichtung kann es nicht zu einer Verstopfung kommen, die den Transport des Gutes A behindern würde.

Nach Figur 2 ist eine Lücke in der Transportschnecke 3 vorgesehen. Diese Lücke bleibt zwischen zwei Teilstücken 3b und 3c der Transportschnecke 3 frei. Das transportierte Gut A wird durch das Teilstück 3b der Transportschnecke 3 in die Lücke hineingeschoben, wo es sich ansammelt und den gesamten Querschnitt des Gehäuses 6 ausfüllt. Diese Pakkung aus dem transportierten Gut A wird bei laufend durch das Teilstück 3b nachgeliefertem Gut A durch das Teilstück 3c der Transportschnecke 3 abgebaut. Dabei ist das Gehäuse 6 gasdicht durch das transportierte Gut A verschlossen.

Die Transportvorrichtung nach Figur 3 unterscheidet sich von derjenigen nach Figur 2 dadurch, daß der Abschnitt im Gehäuse 6, in dem sich keine Transportschnecke 3 befindet, nicht in der Mitte des Gehäuses 6 sondern am ausgangsseitigen Ende des Gehäuses 6 angeordnet ist. Die Transportschnecke 3 nach Figur 3 endet in einem Abstand vor der Abgabeöffnung 8. Es bildet sich dabei zwischen dem Ende der Transportschnecke 3 und der Abgabeöffnung 8 eine Packung aus dem transportierten Gut A, die den gesamten Querschnitt des Gehäuses 6 ausfüllt und das Gehäuse 6 gasdicht verschließt. Bei ständiger Nachlieferung weiteren Gutes A durch die Transportschnecke 3 bricht die dichte Packung stückweise an der Abgabeöffnung 8 ab. Das Gut A gelangt auf diese Weise durch die Abgabeöffnung 8 hindurch aus dem Gehäuse 6 heraus.

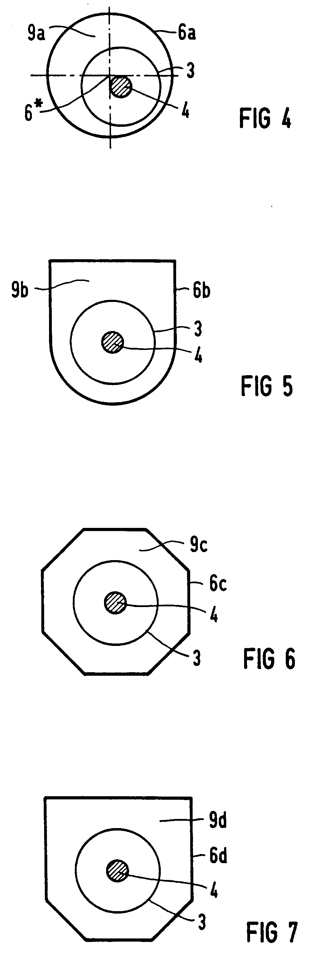

Um das Gehäuse 6 durch das transportierte Gut A gasdicht verschließen zu können, muß die Vorrichtung mit einem hohen Durchsatz betrieben werden. Damit, insbesondere beim Transport von Abfall, relativ große Teile des Gutes A die Transportschnecke 3 nicht blockieren oder verstopfen können, ist nach den Figuren 4 bis 7 ein Ausweichraum 9a - d für solche relativ großen Teile vorgesehen. Bei sich drehender Transportschnecke 3 werden die relativ großen zu transportierenden Teile in den Ausweichraum 9a - d gedrückt, so daß sie die Transportschnecke 3 nicht blockieren können. Der Ausweichraum 9a - d befindet sich in der Regel oberhalb oder seitlich der Transportschnecke 3.

Nach Figur 4 hat das Gehäuse 6a einen kreisförmigen Querschnitt und die Achse oder Welle 4 der Transportschnecke 3 ist im Gehäuse 6a exzentrisch zur Längsachse 6* des Gehäuses 6a angeordnet. Auf diese Weise ergibt sich ein Ausweichraum 9a oberhalb der Transportschnecke 3.

Nach Figur 5 erzielt man einen Ausweichraum 9b durch ein trogförmiges Gehäuse 6b mit einem unteren halbkreisförmigen und einem oberen rechteckigen Teil.

Nach Figur 6 ist ein Gehäuse 6c mit polygonförmigem Querschnitt vorgesehen. Dabei ergeben sich Ausweichräume 9c im Bereich der Gehäusekanten.

Das Gehäuse 6d nach Figur 7 ist eine Kombination aus den Gehäuseformen 6b und 6c. Der Querschnitt des Gehäuses 6d ist gebildet durch einen unteren polygonförmigen Teil und einen oberen rechteckigen Teil. Es ergeben sich dann Ausweichräume 9d im Bereich der Kanten des Gehäuses 6d.

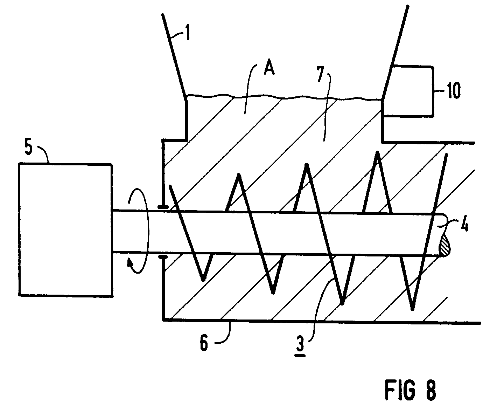

Nach Figur 8 ist die Transportschnecke 3 unterhalb der Einfüllöffnung 7 konisch mit in Transportrichtung zunehmendem Durchmesser ausgebildet. Dadurch wird unterhalb der Einfüllöffnung 7 in Transportrichtung gesehen zunehmend mehr Gut A abtransportiert. Daraus folgt, daß das zugeführte Gut A in einem Fallschacht 1 oberhalb der Einfüllöffnung 7 stets eine waagerechte Oberfläche hat. Erst dann kann mit einem Füllstandsmesser 10 zuverlässig die Füllhöhe im Fallschacht 1 gemessen werden.

Die Transportvorrichtung nach der Erfindung ist allein durch das transportierte Gut A gasdicht. Darüber hinaus ist sichergestellt, daß die Transportschnecke 3 selbst durch relativ große Teile im transportierten Gut A nicht blockiert werden kann. Schließlich ist nach Figur 8 eine Füllstandsmessung im Fallschacht 1 möglich.

## Patentansprüche

1. Transportvorrichtung mit einer Transportschnecke (3), die um ihre Längsachse drehbar ist, in einem Gehäuse (6), das eine Einfüllöffnung (7) und eine Abgabeöffnung (8) aufweist, angeordnet ist und in einem Teilabschnitt des Gehäuses (6) eine kleinere Steigung als im übrigen Bereich aufweist,
**dadurch gekennzeichnet**, daß sich der Abschnitt mit kleinerer Steigung in Transportrichtung in einem Abstand von der Einfüll - (7) und der Abgabeöffnung (8) befindet.

2. Transportvorrichtung nach Anspruch 1,
**dadurch gekennzeichnet,** daß ein Teilstück (3a) der Transportschnecke (3), das eine kleinere Steigung aufweist, zwischen zwei Teilstücken mit größerer Steigung angeordnet ist.

3. Transportvorrichtung nach einem der Ansprüche 1 oder 2,
**dadurch gekennzeichnet,** daß die Transportschnecke (3) im Gehäuse (6) eine Lücke aufweist.

4. Transportvorrichtung nach einem der Ansprüche 1 bis 3,
**dadurch gekennzeichnet,** daß die Transportschnecke (3) im Gehäuse (6) in einem Abstand vor der Abgabeöffnung (8) endet.

5. Transportvorrichtung nach einem der Ansprüche 1 bis 4,
**dadurch gekennzeichnet,** daß zwischen der Transportschnecke (3) und dem Gehäuse (6) ein Ausweichraum (9a bis d) vorhanden ist.

6. Transportvorrichtng nach Anspruch 5,
**dadurch gekennzeichnet,** daß zur Bildung des Ausweichraumes (9a) das Gehäuse (6a) einen kreisförmigen Querschnitt hat und daß die Längsachse der Transportschnecke (3) im Gehäuse (6a) exzentrisch zur Längsachse (6*) des Gehäuses (6a) angeordnet ist.

7. Transportvorrichtung nach Anspruch 5,
**dadurch gekennzeichnet,** daß zur Bildung des Ausweichraumes (9b) das Gehäuse (6b) einen trogförmigen Querschnitt mit einem unteren halbkreisförmigen Teil und einem oberen rechteckigen Teil hat.

8. Transportvorrichtung nach Anspruch 5,
**dadurch gekennzeichnet,** daß zur Bildung des Ausweichraumes (9c) das Gehäuse (6c) einen polygonförmigen Querschnitt hat.

9. Transportvorrichtung nach Anspruch 8,
**dadurch gekennzeichnet,** daß zur Bildung des Ausweichraumes (9d) das Gehäuse (6d) einen trogförmigen Querschnitt mit einem unteren polygonförmigen Teil und einem oberen rechteckigen Teil hat.

10. Transportvorrichtung nach einem der Ansprüche 1 bis 9,
**dadurch gekennzeichnet,** daß die Transportschnecke (3) im Bereich der Einfüllöffnung (7) konisch mit in Transportrichtung zunehmendem Durchmesser ausgebildet ist.

11. Transportvorrichtung nach einem der Ansprüche 1 bis 10,
**dadurch gekennzeichnet,** daß die Einfüllöffnung (7) an einen Fallschacht (1) für Abfall angeschlossen ist.

12. Transportvorrichtung nach einem der Ansprüche 1 bis 11,
**dadurch gekennzeichnet,** daß die Abgabeöffnung (8) an eine Schweltrommel (2) angeschlossen ist.

## Claims

1. Transporting device having a conveyor worm (3) which is rotatable about its longitudinal axis, is disposed in a housing (6) exhibiting a feed opening (7) and a discharge opening (8) and exhibits a smaller pitch in one partial section of the housing (6) than in the remaining region, characterized in that the section having a smaller pitch is located at a distance from the feed opening (7) and the discharge (8) in the transporting direction.

2. Transporting device according to Claim 1, characterized in that a partial element (3a) of the conveyor worm (3) which exhibits a smaller pitch is disposed between two partial elements having a larger pitch.

3. Transporting device according to either of Claims 1 and 2, characterized in that the conveyor worm (3) exhibits a gap in the housing (6).

4. Transporting device according to one of Claims 1 to 3, characterized in that the conveyor worm (3) ends in the housing (6) at a distance before the discharge opening (8).

5. Transporting device according to one of Claims 1 to 4, characterized in that a by-pass space (9a to d) is present between the conveyor worm (3) and the housing (6).

6. Transporting device according to Claim 5, characterized in that for the formation of the by-pass space (9a) the housing (6a) has a circular cross-section and in that the longitudinal axis of the conveyor worm (3) is disposed in the housing (6a) eccentrically to the longitudinal axis (6*) of the housing (6a).

7. Transporting device according to Claim 5, characterized in that for the formation of the by-pass space (9b) the housing (6b) has a trough-shaped cross-section having a lower, semi-circular part and an upper, rectangular part.

8. Transporting device according to Claim 5, characterized in that for the formation of the by-pass space (9c) the housing (6c) has a polygonal cross-section.

9. Transporting device according to Claim 8, characterized in that for the formation of the by-pass space (9d) the housing (6d) has a trough-shaped cross-section having a lower, polygonal part and an upper, rectangular part.

10. Transporting device according to one of Claims 1 to 9, characterized in that the conveyor worm (3), in the region of the feed opening (7), is configured conically, having a diameter which increases in the direction of transport.

11. Transporting device according to one of Claims 1 to 10, characterized in that the feed opening (7) is connected to a fall shaft (1) for waste.

12. Transporting device according to one of Claims 1 to 11, characterized in that the discharge opening (8) is connected to a low-temperature carbonization drum (2).

## Revendications

1. Dispositif de transport comportant une vis (3) convoyeuse, pouvant tourner par rapport à son axe longitudinal, disposée dans un fourreau (6) qui comporte une ouverture (7) de chargement et une ouverture (8) de déchargement et ayant dans un tronçon du fourreau (6) un pas plus petit que dans le reste du fourreau,
caractérisé en ce que
le tronçon ayant un pas plus petit se trouve dans le dispositif de transport à une distance, dans la direction de transport, de l'ouverture (7) de chargement et de l'ouverture (8) de déchargement.

2. Dispositif de transport suivant la revendication 1,
caractérisé en ce
une partie (3a) de la vis convoyeuse, qui a un pas plus petit, est disposée entre deux parties ayant un pas plus grand.

3. Dispositif de transport suivant l'une des revendications 1 ou 2,
caractérisé en ce que
la vis (3) convoyeuse comporte une lacune dans le fourreau (6).

4. Dispositif de transport suivant l'une des revendications 1 à 3,
caractérisé en ce que
la vis (3) convoyeuse se termine dans le fourreau à distance de l'ouverture (8) de déchargement

5. Dispositif de transport suivant l'une des revendications 1 à 4,
caractérisé en ce que
une chambre (9a à d) de contournement est prévue entre la vis (3) convoyeuse et le fourreau (6).

6. Dispositif de transport suivant la revendication 5,
caractérisé en ce que
le fourreau (6a) a une section transversale circulaire pour former la chambre (9a) de contournement et en ce que l'axe longitudinal de la vis (3) convoyeuse est excentrée par rapport à l'axe (6*) longitudinal du fourreau (6a).

7. Dispositif de transport suivant la revendication 5,
caractérisé en ce que
le fourreau (6b) a une section transversale en forme d'auge, en ayant une partie inférieure hémi-circulaire et une partie supérieure rectangulaire, pour former la chambre (9b) de contournement.

8. Dispositif de transport suivant la revendication 5,
caractérisé en ce que
le fourreau (6c) a une section transversale polygonale pour former la chambre (9c) de contournement.

9. Dispositif de transport suivant la revendication 8,
caractérisé en ce que
le fourreau (6d) a une section transversale en forme d'auge, en ayant une partie inférieure polygonale et une partie supérieure rectangulaire, pour former la chambre (9d) de contournement.

10. Dispositif de transport suivant l'une des revendications 1 à 9,
caractérisé en ce que
la vis (3) convoyeuse est conique dans la région de l'ouverture (7) de chargement, en ayant un diamètre croissant dans le sens de transport.

11. Dispositif de transport suivant l'une des revendications 1 à 10,
caractérisé en ce que
l'ouverture (7) de chargement est reliée à un puits (1) pour les déchets.

12. Dispositif de transport suivant l'une des revendications 1 à 11,
caractérisé en ce que
l'ouverture (8) de déchargement est reliée à un tambour (2) de distillation.
